# EUROPEAN PATENT APPLICATION

(11) **EP 2 271 057 A1**
(43) Date of publication of application: **05.01.2011**
(21) Application number: 09290495.2
(22) Date of filing: 26.06.2009
(51) Int. Cl.: H04L 29/08, G06F 17/30

(54) **Device and method for exploiting exchanged data and actions of user communication equipment(s) to improve browsing dynamically, and associated network equipment**

(71) Applicant: Alcatel Lucent, 75008 Paris (FR)
(72) Inventor: Outtagarts, Abdelkader, 91620 Nozay (FR); Marilly, Emmanuel, 91620 Nozay (FR); Boidart, Bertrand, 91620 Nozay (FR)
(74) Representative: Hedarchet, Stéphane

(57) **Abstract**

A device (D), accessible through at least one communication network, is intended for exploiting exchanged data and actions of a communication equipment of a user having a user profile. This device (D) comprises i) an analyzing means (AM) arranged, when it receives a request originating from the communication equipment of this user during browsing through a communication network by means of a browsing application, for analyzing this request and following ones, response messages and data exchanged by this user communication equipment, in order to deduce information relative to the capacity of its user to use functions of the browsing application and user interfaces with his user communication equipment, and ii) a processing means (PM) arranged for adapting user interfaces useful to the user communication equipment during its browsing and/or functions of the browsing application that may be proposed to this user and/or data that must be transmitted to this user communication equipment and/or the user profile from at least the deduced information.

## Description

The present invention relates to the exploitation of the data that are exchanged by user communication equipments and of the actions carried out by these user communication equipments when they are browsing through a communication network by means of a browsing application.

Users of communication equipments (fixed or mobile) may have (very) different capacities to use functions of the browsing application they use with their respective user communication equipments to access to information sources, for instance (but not exclusively) through Internet. The capacity of a user to use functions of a browsing application with a given communication equipment is generally named the user expertise.

Such a user expertise (or capacity) may vary from one communication equipment to another one. It depends generally from the knowledge the user has of the communication equipment he uses for browsing. So, when a user uses for the first time(s) a new communication equipment, he is generally only capable of using efficiently some (very) basic functions of a browsing (or web) application. Then, when he becomes more familiar with his new communication equipment he becomes capable of using more complex functions, till he becomes an expert with this communication equipment and therefore is capable of using almost every browsing functions with the latter. So, most of the differences between users in terms of user expertise depend on their respective knowledge and control (or mastership) of their communication equipments.

Moreover the user communication equipments have generally different technical capacities which do not allow them to use the same browsing application functions and/or the same user interfaces (or MMIs ("Man Machine Interfaces")).

Some solutions have been proposed to adapt automatically the user interfaces and/or the browsing application functions to the technical capacities of the communication equipment of a user and/or to the user profile of this user.

One means here by "user profile" a collection of personal data or data describing a person. So, it may describe interests (or preferences or else habits) relative to one or more subjects, such as television programs, radio programs, news, music, advertising, entertainment, items to buy or use of services, for instance.

These solutions consists in determining the technical capacities of the user communication equipment and/or the user profile to generate customized user interface(s) and provide corresponding browsing application functions. This can be done with a rule based approach which facilitates extensibility and flexibility in user interface generation.

The main disadvantage of these solutions is the fact that they use exclusively static information of the user profiles and static technical capacities of the user communication equipments to provide user interfaces and/or browsing application functions, and therefore do not take into account the current user expertise (and knowledge). So, most of the time the generated user interfaces and/or the proposed browsing application functions are not well adapted to the current user needs.

So the object of this invention is to improve the situation and more precisely to automatically provide users with user interfaces and/or browsing application functions corresponding to their respective user expertise and/or with adapted data corresponding to their respective user expertise and user communication equipments and/or to automatically adapt the user profile by taking into account their respective user expertise.

For this purpose, the invention provides a method, intended for exploiting exchanged data and actions of at least one communication equipment of at least one user having a user profile, and comprising the steps of:
i) analyzing requests, response messages and data exchanged by a communication equipment of a user when it is connected to a communication network for browsing through at least one browsing application, in order to deduce information relative to the capacity of this user to use functions of this browsing application and user interfaces with his user communication equipment, and
ii) adapting user interfaces that may be useful to this user communication equipment during its browsing and/or functions of the browsing application that may be proposed to this user and/or data that must be transmitted to the user communication equipment and/or the user profile from at least the deduced information.

The method according to the invention may include additional characteristics considered separately or combined, and notably:
- during step ii) one may take into account the (technical) capacities of the user communication equipment for adapting the user interfaces and/or the browsing application functions;
- during step i) one may further get additional information representative of opinions of other users (using communication equipments similar to the user communication equipment) relative to problems encountered when using this browsing application and/or during exchanges of data identical to the one exchanged by the user communication equipment;
   ➢ during step i) one may get the additional information near at least one information source chosen from a group comprising at least social network(s), discussion forum(s) and database(s);
- during step i) one may determine interests of the user near at least one information source, and during step ii) one may adapt the user profile from the determined user interests;
- during step i) one may determine a mean frequency of the requests transmitted by the user communication equipment in order to deduce a level of control of its user, and during step ii) one may adapt the user interfaces and/or the browsing application functions from at least the determined request mean frequency;
- during step i) one may deduce a type of content data from the data downloaded by the user communication equipment, and during step ii) one may adapt the format of the data that are requested by this user communication equipment and/or the user profile from at least the deduced content data type;
- during step i) one may assign at least one index value to the communication addresses used by the user communication equipment and one may classify these used communication addresses as a function of the respective values of at least one chosen index.

The invention further provides a device, intended for exploiting exchanged data and actions of at least one communication equipment of at least one user having a user profile, accessible through at least one communication network, and comprising:
- an analyzing means arranged, when it receives a request originating from a communication equipment of a user, browsing through a communication network by means of a browsing application, for analyzing this request and following ones, response messages and data exchanged by this user communication equipment, in order to deduce information relative to the capacity of this user to use functions of this browsing application and user interfaces with this user communication equipment, and
- a processing means arranged for adapting user interfaces useful to this user communication equipment during its browsing and/or functions of this browsing application that may be proposed to the user and/or data that must be transmitted to this user communication equipment and/or the user profile from at least the deduced information.

The device according to the invention may include additional characteristics considered separately or combined, and notably:
- its processing means may be arranged for adapting the user interfaces and/or the browsing application functions by taking into account capacities of the user communication equipment;
- its analyzing means may be arranged for getting additional information representative of opinions of other users (using communication equipments similar to the user communication equipment) relative to problems encountered when using the browsing application and/or during exchanges of data identical to the one exchanged by the user communication equipment;
   ➢ its analyzing means may be arranged for getting the additional information near at least one information source chosen from a group comprising at least social network(s), discussion forum(s) and database(s);
- its analyzing means may be arranged for determining interests of the user near at least one information source, and its processing means may be arranged for adapting the user profile from the determined user interests;
- its analyzing means may be arranged for determining a mean frequency of the requests transmitted by the user communication equipment in order to deduce a level of control of its user, and its processing means may be arranged for adapting the user interfaces and/or the browsing application functions from at least the determined request mean frequency;
- its analyzing means may be arranged for deducing a type of content data from the data downloaded by the user communication equipment, and its processing means may be arranged for adapting the format of the data that are requested by this user communication equipment and/or the user profile from at least the deduced content data type;
- its analyzing means may be arranged for assigning at least one index value to the communication addresses used by the user communication equipment and for classifying these used communication addresses as a function of the respective values of at least one chosen index.

The invention also provides a network equipment, for at least one communication network, and comprising a device such as the one above introduced.

Other features and advantages of the invention will become apparent on examining the detailed specifications hereafter and the appended drawings, wherein:
- figure 1 schematically illustrates a communication network to which are connected several user communication equipments and which is connected to Internet as a network equipment comprising a device according to the invention and connected to a web server, and
- figure 2 schematically and functionally illustrates an example of embodiment of a device according to the invention coupled to several databases and to information sources.

The appended drawings may serve not only to complete the invention, but also to contribute to its definition, if need be.

The invention aims at offering a method and an associated device (D) intended for exploiting, preferably dynamically (or in live), the data that are exchanged by user communication equipments (CE) and the actions carried out by these user communication equipments (CE) when they are browsing through a communication network (CN) by means of a browsing application, in order to ease their browsing.

One means here by "action" any browsing operation selected by a user and carried out by his communication equipment by using a browsing application function.

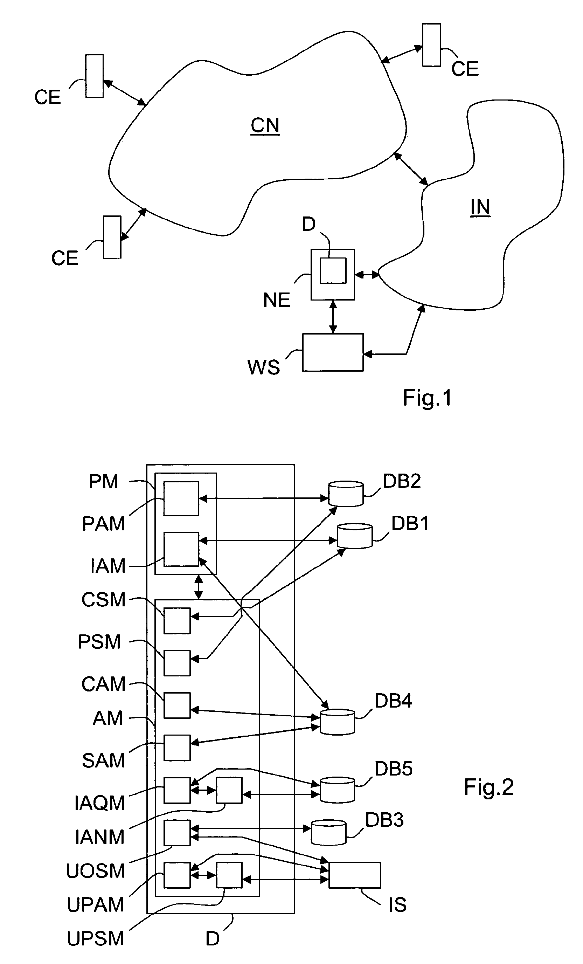

As illustrated in figure 1, a device D, according to the invention, may be localized into a network equipment NE in order to work in a centralized manner for the clients of one or more operators of communication network(s) CN. But it could be also coupled to a network equipment, or located into, or coupled to, a user communication equipment CE in order to work in a distributed manner specifically for this user communication equipment CE.

So, a device D, according to the invention, can be made of software modules (in this case it can be stored in a memory or in any computer software product, such as a CD-ROM, for instance), or it can be made of a combination of electronic circuit(s) (or hardware modules) and software modules (in this case it further comprises a software interface allowing interworking between the hardware and software modules), or else it can be made of electronic circuit(s).

In case where the device D is coupled to a network equipment NE, the latter may be, for instance, a server, possibly of the proxy type, which is connected to Internet IN, as illustrated. Moreover and as illustrated, this network equipment NE can be also connected to a web server WS which is also connected to Internet IN and intended for responding to the HTTP requests that are generated by the user communication equipments CE (and more precisely by a user agent they store (such as a browser application)) by serving them HTTP response messages possibly with data contents extracted from Internet (usually web pages (such as HTML documents, for instance) possibly with linked objects (such as images, for instance)).

In the following description it will be considered, only as illustrating example, that the user communication equipments CE are of the mobile (or wireless) type. So, they may be mobile telephones, portable computers (or laptops), fixed computers equipped with a wireless communication module, or personal digital assistants (or PDAs), possibly of the smartphone type. But the invention concerns any type of user communication equipment, and notably fixed (or wired) user communication equipments, such as fixed telephones or fixed computers, for instance.

A user communication equipments CE comprises at least one browsing application (or web browser) intended for allowing it to browse (or navigate) through Internet IN, via the communication network CN to which it is connected.

A device D, according to the invention, is intended for offering a customized service put at the disposal of clients (users) of at least one operator of at least one communication network CN.

As illustrated in figure 2, such a device D comprises at least an analyzing means (or module) AM and a processing means (or module) PM.

The analyzing module AM intervenes each time its device D receives a request (here a HTTP request) originating from a communication equipment CE of a user when it (CE) is browsing through a communication network CN by means of a browsing application.

It is important to note that these requests are intended for a web server WS, but are before automatically transmitted to the network equipment NE which is coupled to the device D for processing purpose.

It is also important to note that when the device D receives a first request originating from a communication equipment CE, it first checks if the user of this communication equipment CE can benefit of its service. This can be done, for instance, by searching the user identifier into a list. If the user is authorized to benefit from the service, the device D may further search, into a first database DB1, the technical capacities of the communication equipment CE that is currently used by this user for browsing. But such a second search can be carried out later.

It is also important to note that in figure 2 the first database DB1 is not comprised into the device D. For instance it may be located into a network equipment, may be the one (NE) which comprises device D. But in a variant this first database DB1 could be comprised into the device D.

If the requesting user is authorized to benefit from the service offered by the device D, the latter transfers the first request to its addressee (for instance the web server WS), and its analyzing module AM analyzes the (first) received request. This analyzing module AM will also automatically analyze the following requests originating from the communication equipment CE of this authorized user during the same browsing with the same browsing application, but also the response messages intended for this user communication equipment CE and the data exchanged by this user communication equipment CE during the same browsing with the same browsing application, without checking again if it is authorized to benefit from the service.

One means here by "exchanged data" any type of data that are downloaded or uploaded by a user communication equipment CE during browsing, and notably data defining contents (or content items), such as web pages (for instance HTML documents) possibly with linked objects (for instance images).

So, the analyzing module AM analyzes the (HTTP) requests, the (HTTP) response messages and the exchanged data concerning this user communication equipment CE during at least its current browsing, to deduce information relative to the capacity of its user to use functions of the used browsing application and the proposed user interfaces with his user communication equipment CE (i.e. his expertise). It may also analyze information relative to preceding browsing experiences that are stored into a database.

For this purpose, the analyzing module AM may comprise one or more sub modules, as illustrated in the example of embodiment of figure 2.

For instance, if the technical capacities of the user communication equipment CE have not yet been found, the analyzing module AM may comprise a sub module CSM which is intended for finding them into the first database DB1.

The analyzing module AM comprises also mandatory another sub module PSM which is intended for searching data defining at least partly the user profile of the authorized user into a second database DB2. In figure 2 the second database DB2 is not comprised into the device D. For instance it may be located into a network equipment, may be the one (NE) which comprises device D. But in a variant this second database DB2 could be comprised into the device D.

The analyzing module AM may also comprise another sub module UOSM which is intended for searching additional information representative of opinions of other users, which have used a communication equipment similar to the concerned user communication equipment CE, relative to problems encountered when they have used the same browsing application as the one used by this concerned user communication equipment CE and/or relative to problems encountered during exchanges of (content) data identical to the ones exchanged by this user communication equipment CE.

This last search can be done near at least one information source which is accessible through Internet IN, for instance.

An information source may be a third database DB3 which stores opinions and recommendations of users (preferably professional one and non-professional one) that are relative to the use of a browsing application or of a user interface and to downloading or uploading of content data. In figure 2 the third database DB3 is not comprised into the device D. For instance it may be located into a network equipment, may be the one (NE) which comprises device D. But in a variant this third database DB3 could be comprised into the device D.

Other information sources may be social network(s) or discussion forum(s) IS that are all accessible through Internet IN.

The analyzing module AM may also comprise another sub module UPSM which is intended for searching identifier(s) of an authorized user near one or several information sources, such as social network(s) and/or discussion forum(s) IS that are all accessible through Internet IN. In this case, it may further comprise another sub module UPAM which is intended for analyzing the data exchanged by an authorized user into one or several information sources IS where he has been identified by the sub module UPSM, but also the data exchanged by other persons into each of these information sources IS, in order to determine interests of this authorized user.

The analyzing module AM may also comprise another sub module SAM which is intended for determining the mean frequency of the requests that have been transmitted by the communication equipment CE of a user, in order to deduce his level of control of his communication equipment CE. Indeed, if a user generates a lot of requests in a short time and/or uses a lot of browsing application functions, this shows, with a strong probability, that it is very familiar with its communication equipment, and therefore can be considered as an expert. On the contrary, if a user generates few requests in a short time and/or uses few browsing application functions, this shows, with a strong probability, that it is not familiar with its communication equipment, and therefore can be considered as a beginner. This determination can be performed by means of statistical method(s), but also possibly by considering the past browsing experiences of the user when they are stored (by device D) into a fourth database DB4.

In figure 2 the fourth database DB4 is not comprised into the device D. For instance it may be located into a network equipment, may be the one (NE) which comprises device D. But in a variant this fourth database DB4 could be comprised into the device D.

The analyzing module AM may also comprise another sub module CAM which is intended for analyzing the content data that are (and possibly that have been) downloaded by a user communication equipment CE, in order to deduce the type of each downloaded content. This analyze can be performed into the fourth database DB4, when the latter (DB4) also stores the identifiers (and/or the types) of the contents (or content items) exchanged by the users.

This sub module CAM preferably stores the determined type of each content exchanged by a user communication equipment CE into the fourth database DB4.

The analyzing module AM may also comprise another sub module IANM which is intended for assigning at least one index value to the communication addresses that are used by a user communication equipment CE. An index may be representative of a frequency of visit of an URL address ("Uniform Resource Locator"), of a date of visit of a given web site, or of a number of pages visited on a given web site. The values of the indexes assigned to the communication addresses can be stored (by the device D) into a fifth database DB5.

In figure 2 the fifth database DB5 is not comprised into the device D. For instance it may be located into a network equipment, may be the one (NE) which comprises device D. But in a variant this fifth database DB5 could be comprised into the device D.

In this case, the analyzing module AM may further comprise another sub module IAQM which is intended for classifying the communication addresses that are used by a user communication equipment UE as a function of the respective values of one or more chosen indexes stored into the fifth database DB5. This allows to interpret the usual needs of an authorized user.

The processing module PM of the device D is arranged for adapting the user interfaces that are useful to a communication equipment CE of an authorized user during its browsing and/or for adapting the functions of the browsing application that may be proposed to this authorized user and/or for adapting the data that must be transmitted to this user communication equipment CE during its browsing and/or the user profile of this authorized user from at least the information (and possible additional information) that has been deduced by the analyzing module AM.

It is important to note that the adaptation is determined when the device D receives a response message to a request of an authorized user from the addressee of this request (for instance the web server WS). Once an adaptation has been determined, it is implemented by the device D. For instance, the device D may transmit the determined adapted user interfaces and/or adapted browsing application functions and/or adapted content with the message response of the web server WS to the requesting user communication equipment CE.

The processing module PM may comprise a sub module IAM which is intended for adapting the user interfaces and/or the browsing application functions, which must be proposed to a user during a browsing with the browsing application of his communication equipment CE, in order to ease this browsing.

This can be done by taking into account technical capacities of the user communication equipment CE. Indeed, the user interfaces and/or the browsing application functions which must be proposed to a user depend notably from the technical capacities of the user communication equipment CE.

So, the invention allows to better adapt the content, the user interfaces and the browsing application functions not only to the expertise (and then needs) of the user but also to the capacities of the communication equipment CE of this user.

These technical capacities can be either provided to the sub module IAM by the analyzing module AM or determined by the sub module IAM into the first database DB1.

This sub module IAM may be also arranged for adapting the user interfaces and/or the browsing application functions from at least the request mean frequency which has been determined by the sub module SAM of the analyzing module AM. Indeed, as mentioned above, the request mean frequency is representative of the level of control of a communication equipment CE by an authorized user and therefore can be used as a parameter during the adaptation of the user interfaces and/or the browsing application functions.

It is important to note that the value of a request mean frequency can be either provided to the sub module IAM by the sub module SAM or determined by the sub module IAM into the fourth database DB4 if it has been stored in it by the sub module SAM.

It is also important to note that the sub module IAM may store the user interface adaptations and/or the browsing application function adaptations into the fourth database DB4.

The sub module IAM may be also arranged for adapting the user interfaces and/or the browsing application functions from opinions and recommendations of other persons (additional information) that have been determined by the sub module UOSM (and which are stored into the third database DB3).

The processing module PM may also comprise a sub module PAM which is intended for adapting the user profile of an authorized user from his user interests, which are defined by his user profile (which are stored into the second database DB2) and also possibly by the additional information (user interests) determined by the possible sub module UPAM into the information sources IS.

This sub module PAM may be also arranged for adapting the format of the (content) data that are requested by a communication equipment CE of an authorized user and/or the user profile of an authorized user from the type of the content data it has requested and which has been determined by the sub module CAM (and which is preferably stored into the fourth database DB4) and also possibly from the determined capacities of this user communication equipment CE.

Adapting the format of a requested content is of interest because a user communication equipment CE may be incapable of downloading or using (playing) a content as it has been requested by its user but it may be capable of using (playing) this requested content with a lower definition and/or at a lower speed, for instance, or on the contrary a beginner may have requested a content with a low definition and/or at a low speed while his communication equipment CE is capable of downloading or using (playing) this content with a higher definition and/or at a higher speed, or else it may allow to adapt the data to be displayed while taking into account visual capacities and/or preferences of a user, or else it may allow to increase or decrease the sound intensity of a music program as a function of the current user location and/or the user hearing capacities.

It is important to note that the device D may propose to a user, through his user communication equipment CE, to choose at any moment his level of expertise. For instance, it can be proposed to the user to choose a basic mode (for beginners) or an intermediate mode or else an expert mode. In this case, the device D proceeds to its adaptation by taking into account the chosen mode. In other words, it starts from the level of expertise that corresponds to the mode chosen by the authorized user, and then progressively and automatically upgrades this level if it observes that this authorized user becomes more and more familiar with his user communication equipment CE and with the browser application. For instance, if a basic mode is chosen by a user, then the device D will begin its adaptations with basic user interfaces and basic browser application functions. Now, if an expert mode is chosen by a user, then the device D will begin its adaptations with expert user interfaces and expert browser application functions.

The invention can also be considered in terms of a method for exploiting exchanged data and actions of at least one communication equipment CE of at least one user having a user profile.

Such a method may be implemented by means of a device D such as the one above described with reference to figures 1 and 2. Therefore, only its main characteristics will be mentioned hereafter.

The method according to the invention comprises the steps of:
i) analyzing requests, response messages and data exchanged by a communication equipment CE of a user when it is connected to a communication network CN for browsing through at least one browsing application, in order to deduce information relative to the capacity of this user to use functions of this browsing application and user interfaces with his user communication equipment CE, and
ii) adapting user interfaces useful to this user communication equipment CE during its browsing and/or functions of the browsing application that may be proposed to this user and/or data that must be transmitted to this user communication equipment CE and/or the user profile of this user from at least the deduced information.

The invention is not limited to the embodiments of device, method and network equipment described above, only as examples, but it encompasses all alternative embodiments which may be considered by one skilled in the art within the scope of the claims hereafter.

## Claims

1. Method for exploiting exchanged data and actions of at least one communication equipment (CE) of at least one user having a user profile, **characterized in that** it comprises the steps of i) analyzing requests, response messages and data exchanged by a communication equipment (CE) of a user when it is connected to a communication network (CN) for browsing through at least one browsing application, in order to deduce information relative to the capacity of said user to use functions of said browsing application and user interfaces with said user communication equipment (CE), and ii) adapting user interfaces useful to said user communication equipment (CE) during said browsing and/or functions of said browsing application that may be proposed to said user and/or data that must be transmitted to said user communication equipment (CE) and/or said user profile from at least said deduced information.

2. Method according to claim 1, **characterized in that** during step ii) one takes into account capacities of said user communication equipment (CE) to adapt said user interfaces and/or said browsing application functions.

3. Method according to one of claims 1 and 2, **characterized in that** during step i) one further gets additional information representative of opinions of other users, using communication equipments similar to said user communication equipment (CE), relative to problems encountered when using said browsing application and/or during exchanges of data identical to the one exchanged by said user communication equipment (CE).

4. Method according to claim 3, **characterized in that** during step i) one gets said additional information near at least one information source chosen from a group comprising at least social network(s), discussion forum(s) and database(s).

5. Method according to one of claims 1 to 4, **characterized in that** during step i) one determines interests of said user near at least one information source, and during step ii) one adapts said user profile from said determined user interests.

6. Method according to one of claims 1 to 5, **characterized in that** during step i) one determines a mean frequency of the requests transmitted by said user communication equipment (CE) in order to deduce a level of control of said user, and during step ii) one adapts said user interfaces and/or said browsing application functions from at least said determined request mean frequency.

7. Method according to one of claims 1 to 6, **characterized in that** during step i) one deduces a type of content data from the data downloaded by said user communication equipment (CE), and during step ii) one adapts the format of the data that are requested by said user communication equipment (CE) and/or said user profile from at least said deduced content data type.

8. Method according to one of claims 1 to 7, **characterized in that** during step i) one assigns at least one index value to the communication addresses used by said user communication equipment (CE) and one classifies these used communication addresses as a function of the respective values of at least one chosen index.

9. Device (D) for exploiting exchanged data and actions of at least one communication equipment (CE) of at least one user having a user profile, said device (D) being accessible through at least one communication network (CN), **characterized in that** it comprises i) an analyzing means (AM) arranged, when it receives a request originating from a communication equipment (CE) of a user, browsing through a communication network (CN) by means of a browsing application, for analyzing this request and following ones, response messages and data exchanged by said user communication equipment (CE), in order to deduce information relative to the capacity of said user to use functions of said browsing application and user interfaces with said user communication equipment (CE), and ii) a processing means (PM) arranged for adapting user interfaces useful to said user communication equipment (CE) during said browsing and/or functions of said browsing application that may be proposed to said user and/or data that must be transmitted to said user communication equipment (CE) and/or said user profile from at least said deduced information.

10. Device according to claim 9, **characterized in that** said processing means (PM) is arranged for adapting said user interfaces and/or said browsing application functions by taking into account capacities of said user communication equipment (CE).

11. Device according to one of claims 9 and 10, **characterized in that** said analyzing means (AM) is arranged for getting additional information representative of opinions of other users, using communication equipments similar to said user communication equipment (CE), relative to problems encountered when using said browsing application and/or during exchanges of data identical to the one exchanged by said user communication equipment (CE).

12. Device according to claim 11, **characterized in that** said analyzing means (AM) is arranged for getting said additional information near at least one information source chosen from a group comprising at least social network(s), discussion forum(s) and database(s).

13. Device according to one of claims 9 to 12, **characterized in that** said analyzing means (AM) is arranged for determining interests of said user near at least one information source, and **in that** said processing means (PM) is arranged for adapting said user profile from said determined user interests.

14. Device according to one of claims 9 to 13, **characterized in that** said analyzing means (AM) is arranged for determining a mean frequency of the requests transmitted by said user communication equipment (CE) in order to deduce a level of control of said user, and **in that** said processing means (PM) is arranged for adapting said user interfaces and/or said browsing application functions from at least said determined request mean frequency.

15. Device according to one of claims 9 to 14, **characterized in that** said analyzing means (AM) is arranged for deducing a type of content data from the data downloaded by said user communication equipment (CE), and **in that** said processing means (PM) is arranged for adapting the format of the data that are requested by said user communication equipment (CE) and/or said user profile from at least said deduced content data type.

16. Device according to one of claims 9 to 15, **characterized in that** said analyzing means (AM) is arranged for assigning at least one index value to the communication addresses used by said user communication equipment (CE) and for classifying these used communication addresses as a function of the respective values of at least one chosen index.

17. Network equipment (NE) for at least one communication network (CN), **characterized in that** it comprises a device (D) according to one of claims 9 to 16.
